# EUROPEAN PATENT APPLICATION

(11) **EP 4 152 133 A1**
(43) Date of publication of application: **22.03.2023**
(21) Application number: 21813021.9
(22) Date of filing: 26.05.2021
(51) Int. Cl.: G06F 3/0481

(54) **APPLICATION ICON DISPLAY METHOD AND APPARATUS, AND ELECTRONIC DEVICE**

(30) Priority: 27.05.2020 CN 202010463566
(71) Applicant: Vivo Mobile Communication Co., Ltd., Dongguan, Guangdong 523863 (CN)
(72) Inventor: HU, Shuo, Dongguan, Guangdong 523863 (CN)
(74) Representative: Chimini, Francesco
(86) International application number: PCT/CN2021/096187
(87) International publication number: WO 2021/239016

(57) **Abstract**

An application icon display method and apparatus, and an electronic device are disclosed. The method includes: (step 101) receiving a first input by a user in a case that an application icon in a target page is displayed on a screen by using a first display parameter; and (step 102) in response to the first input, updating a display parameter of the target page from the first display parameter to a second display parameter, and displaying the application icon in the target page on the screen by using the second display parameter, where the target page includes all application icons in an electronic device.

## Description

### CROSS-REFERENCE TO RELATED APPLICATIONS

This application claims priority to Chinese Patent Application No. 202010463566.3, filed with the China National Intellectual Property Administration on May 27, 2020 and entitled "APPLICATION ICON DISPLAY METHOD AND APPARATUS, AND ELECTRONIC DEVICE", which is incorporated herein by reference in its entirety.

### TECHNICAL FIELD

Embodiments of this application relate to the field of communications technologies, and in particular, to an application icon display method and apparatus, and an electronic device.

### BACKGROUND

As an electronic device becomes more intelligent, more and more applications are installed in the electronic device, so that more and more application icons are displayed on a desktop in the electronic device.

Currently, the electronic device generally arranges and displays one or more application icons on the desktop according to a fixed icon size. In this case, in a case that a quantity of application icons in the electronic device is relatively large, because a display region of a screen of the electronic device is limited, the electronic device needs to create a plurality of display pages, so that all application icons in the electronic device can be arranged and displayed.

In this way, in a case that a quantity of application icons in the electronic device is relatively large, if a user needs to search for a target application icon, the user may need to browse the plurality of display pages for a plurality of times to find the application icon from a specified display page. Consequently, when there are many application icons in the electronic device, a user operation in a process of searching for an application icon is cumbersome and time-consuming.

### SUMMARY

Embodiments of this application aim to provide an application icon display method and apparatus, and an electronic device, to resolve a problem that a user operation in a process of searching for an application icon is cumbersome and time-consuming when there are many application icons in an electronic device.

To resolve the foregoing technical problem, this application is implemented as follows:
According to a first aspect, an embodiment of this application provides an application icon display method. The method includes: receiving a first input by a user in a case that an application icon in a target page is displayed on a screen by using a first display parameter; and in response to the first input, updating a display parameter of the target page from the first display parameter to a second display parameter, and displaying the application icon in the target page on the screen by using the second display parameter, where the target page includes all application icons in an electronic device, and the display parameter of the target page includes at least one of the following: a proportion parameter and a region parameter, where the region parameter may be used to indicate a region in which an application icon in the target page that is displayed in a current display region of the screen is located.

According to a second aspect, an embodiment of this application provides an application icon display apparatus. The apparatus includes a receiving module and a display module. The receiving module may be configured to receive a first input by a user in a case that an application icon in a target page is displayed on a screen by using a first display parameter; and the display module may be configured to: in response to the first input received by the receiving module, update a display parameter of the target page from the first display parameter to a second display parameter, and display the application icon in the target page on the screen by using the second display parameter, where the target page includes all application icons in an electronic device, and the display parameter of the target page includes at least one of the following: a proportion parameter and a region parameter, where the region parameter may be used to indicate a region in which an application icon in the target page that is displayed in a current display region of the screen is located.

According to a third aspect, an embodiment of this application provides an electronic device. The electronic device includes a processor, a memory, and a program or an instruction that is stored in the memory and executable on the processor, where when the program or the instruction is executed by the processor, the steps of the method in the first aspect are implemented.

According to a fourth aspect, an embodiment of this application provides a readable storage medium. The readable storage medium stores a program or an instruction, and when the program or the instruction is executed by a processor, the steps of the method in the first aspect are implemented.

According to a fifth aspect, an embodiment of this application provides a chip. The chip includes a processor and a communications interface, the communications interface is coupled to the processor, and the processor is configured to run a program or an instruction to implement the method in the first aspect.

In the embodiments of this application, in a case that an application icon in a target page is displayed on a screen by using a first display parameter, an electronic device may be triggered, through a first input, to display the application icon in the target page on the screen by using a second display parameter. The target page includes all application icons in the electronic device, and a display parameter of the target page includes at least one of the following: a proportion parameter and a region parameter, where the region parameter is used to indicate a region in which an application icon in the target page that is displayed in a current display region of the screen is located. That is, through the first input on the target page, the user may trigger the electronic device to update the application icon displayed on the screen and/or update a display size of the application icon displayed on the screen. In this way, interest of human-computer interaction in an application icon update process is improved, and coherence of updating display of an application icon on the screen can be improved while avoiding switching between different desktop pages of the electronic device. In addition, the electronic device displays the target page, some or all application icons in the electronic device can be displayed to a user at a same moment by using one desktop page. For example, when the second display parameter corresponds to all icons in the target page, the electronic device displays the target page by using the second display parameter, so that all icons in the electronic device can be displayed to the user at a same moment. Therefore, even if there are many application icons in the electronic device, the user can intuitively and quickly search for a required application icon in the target page displayed in the electronic device, without browsing a plurality of desktop pages of the electronic device. In this way, steps of searching for an application icon by the user from many application icons are simplified, and time consumption is reduced.

### BRIEF DESCRIPTION OF DRAWINGS

FIG. 1 is a first schematic diagram of an application icon display method according to an embodiment of this application;
FIG. 2 is a schematic diagram of an operation of updating and displaying a target page by an electronic device according to an embodiment of this application;
FIG. 3 is a second schematic diagram of an application icon display method according to an embodiment of this application;
FIG. 4 is a schematic diagram of an operation of updating and displaying an associated application icon by an electronic device according to an embodiment of this application;
FIG. 5 is a schematic diagram of an operation of a target control on an electronic device according to an embodiment of this application;
FIG. 6 is a schematic structural diagram of an application icon display apparatus according to an embodiment of this application; and
FIG. 7 is a schematic diagram of hardware of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms "first", "second", and the like are intended to distinguish between similar objects but do not describe a specific order or sequence. It should be understood that the data used in such a way is interchangeable in proper circumstances so that the embodiments of this application can be implemented in an order other than the order illustrated or described herein. In addition, in the specification and the claims, "and/or" represents at least one of connected objects, and a character "/" generally represents an "or" relationship between associated objects.

With reference to the accompanying drawings, an application icon display method provided in the embodiments of this application is described in detail by using specific embodiments and application scenarios.

In the embodiments of this application, in a case that an application icon in a target page is displayed on a screen by using a first display parameter, an electronic device may be triggered, through a first input, to display the application icon in the target page on the screen by using a second display parameter. The target page includes all application icons in the electronic device, and a display parameter of the target page includes at least one of the following: a proportion parameter and a region parameter, where the region parameter is used to indicate a region in which an application icon in the target page that is displayed in a current display region of the screen is located. That is, through the first input on the target page, the user may trigger the electronic device to update the application icon displayed on the screen and/or update a display size of the application icon displayed on the screen. In this way, interest of human-computer interaction in an application icon update process is improved, and coherence of updating display of an application icon on the screen can be improved while avoiding switching between different desktop pages of the electronic device. In addition, the electronic device displays the target page, some or all application icons in the electronic device can be displayed to a user at a same moment by using one desktop page. Therefore, the user can intuitively and quickly search for a required application icon in the target page displayed in the electronic device, thereby simplifying steps of searching for an application icon by the user from many application icons and reducing time consumption.

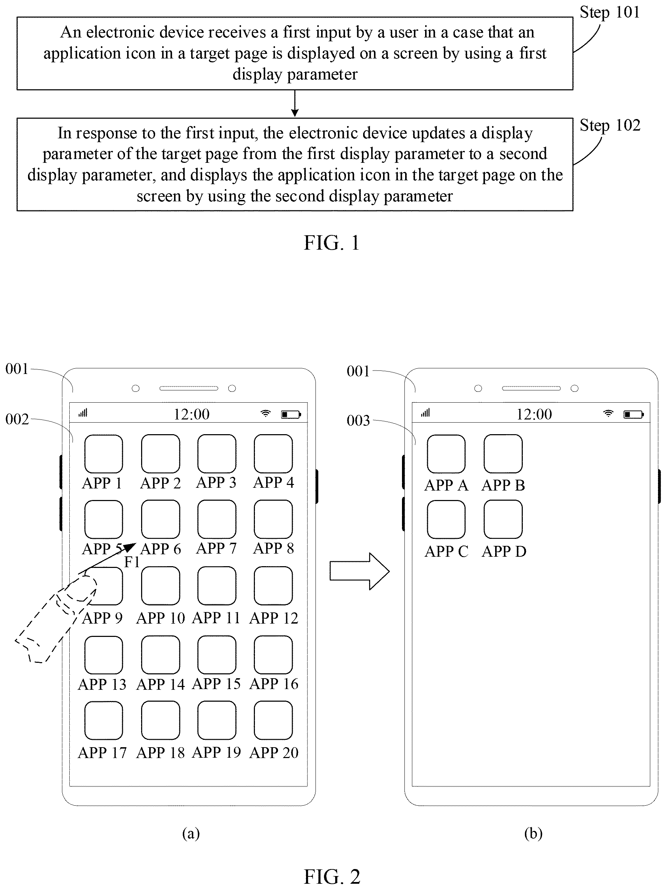

As shown in FIG. 1, an embodiment of this application provides an application icon display method. The method may include the following steps 101 and step 102.

Step 101: An electronic device receives a first input by a user in a case that an application icon in a target page is displayed on a screen by using a first display parameter.

It should be noted that in this embodiment of this application, the foregoing screen is a screen of the electronic device, or a screen of an apparatus (for example, the following application icon display apparatus) that uses the application icon display method in this application. The following embodiment is described by using the screen of the electronic device as an example, and does not constitute a limitation on this application.

Optionally, in this embodiment of this application, the target page is a page that includes all application icons in the electronic device, that is, an icon of an application installed in the electronic device and an icon of a system application of the electronic device are included in the target page. All or a part of application icons of the target page may be displayed on the screen of the electronic device.

Optionally, in this embodiment of this application, the first display parameter may be used to determine a proportion of the target page displayed on the screen and a specific displayed region. Specifically, the first display parameter may specifically include a first proportion parameter and a first region parameter. The first proportion parameter may be used to determine a display proportion of the target page, that is, may be used to determine a display size of an application icon displayed in the target page. The first region parameter may be used to determine a region in which the target page is displayed on the screen of the electronic device, that is, a region in which the target page is displayed on the screen of the electronic device.

It should be noted that the target page displayed by using the first display parameter may include a complete application icon, or may be an incomplete application icon (that is, a part of the application icon is displayed on the screen, and another part of the application icon is not displayed on the screen). All displayed complete application icons and non-complete application icons in the target page may receive an operation of the user. For example, a tap operation of the user triggers the electronic device to start an application indicated by the application icon, or a drag operation of the user changes an arrangement manner of the application icon in the target page.

Optionally, in this embodiment of this application, the first input may be an input for triggering the electronic device to jump from a current display region on the screen to a region that the user needs to display. For example, the first input may be used to trigger the screen of the electronic device to switch from one region of displaying the target page to another region of displaying the target page.

Specifically, the first input may be a slide input or a drag input on the target page. The drag input may be a drag input by the user dragging the target page in any direction, and the slide input may be an input in which the user controls two fingers to slide toward or against each other in a case that the user presses the screen by using the two fingers.

It should be noted that the drag input changes only a display position of the target page, and does not change the display proportion of the target page. The pressed slide input can not only change the display position of the target page, but also change a display size of the target page.

The first input may be alternatively a touch and tap input on a preset control when the preset control is displayed in the target page. The preset control may be used to control a display proportion and a display position of the target page on the screen of the electronic device, and the touch input may be any one of the following: a single-tap input, a double-tap input, a long-press input, a drag input along a preset track, and the like.

The first input may be alternatively a voice input. Content of the voice input may be used to instruct the electronic device to control a display proportion and a display position of the target page on the screen of the electronic device. The voice content may include information indicating the display proportion and the display position, for example, voice information that includes the first display parameter or the second display parameter. It should be noted that, the first input may be determined according to an actual use requirement, and is not specifically limited in this embodiment of this application.

Optionally, in this embodiment of this application, the first input may be divided into at least one sub-input (for example, a first sub-input and a second sub-input in the following step 102) in a specific use process, so that the user can trigger the electronic device to perform different operations through different sub-inputs. For example, different sub-inputs may be used to control adjustment of each specific parameter in the following display parameters.

Step 102: In response to the first input, the electronic device updates a display parameter of the target page from the first display parameter to a second display parameter, and displays the application icon in the target page on the screen by using the second display parameter.

The target page includes all application icons in the electronic device, and a display parameter of the target page includes at least one of the following: a proportion parameter and a region parameter, where the region parameter may be used to indicate a region in which an application icon in the target page that is displayed in a current display region of the screen is located.

It should be noted that, in this embodiment of this application, the target display parameter may be used to determine display content of the target page on the screen of the electronic device. Specifically, the display content is mainly determined by using the proportion parameter for displaying the target page and the region parameter for displaying the target page.

Optionally, in this embodiment of this application, the proportion parameter may be used to determine a display proportion of the target page. Specifically, in a case that the proportion parameter is relatively small, all application icons may be displayed on the screen of the electronic device. In this case, because an application icon is relatively small, the user may view the application icon by using a name of the application icon. In a case that the proportion parameter is relatively large, a part of application icons may be displayed on the screen of the electronic device, so that the user can perform a specific operation on the application icon. That is, the proportion parameter essentially controls a display proportion of the target page, and may be specifically represented by a display size of an icon in the target page.

Optionally, in this embodiment of this application, the region parameter may be used to determine a current display region in which the target page is displayed on the screen of the electronic device, that is, the region parameter may be used to locate a region of the target page that is displayed in the current display region of the screen of the electronic device. Specifically, the user may set different numbers or coordinates for regions in the target page. The region parameter may be one group of numbers or coordinates used to indicate one region. The electronic device detects a number or coordinates of a current display region displayed on the screen, and further determines that a region indicated by a number or coordinates of the target page is currently displayed on the screen of the electronic device. For example, an XOY coordinate system is established in the target page, each region in the target page may be represented by using one group of coordinates, and a target parameter may be one group of coordinates representing one region. It should be noted that, the following embodiment is described by using an example in which coordinates represent the region parameter, and does not constitute a limitation on this application.

It should be noted that, in this embodiment of this application, the current display region of the screen may be the entire screen of the electronic device described in step 101, or may be a part of the screen of the electronic device.

Optionally, in this embodiment of this application, the region parameter is determined according to a display size of the screen, positioning coordinates, and the proportion parameter.

The positioning coordinates are coordinates in the target page that are corresponding to target coordinates on the screen of the electronic device.

Optionally, in this embodiment of this application, the display size of the screen is a size of a region that includes pixels lighted on the screen of the electronic device. The positioning coordinates are coordinates in a region indicated by a region display parameter, for example, first coordinates and second coordinates. The positioning coordinates may be coordinates in the target page that are corresponding to target coordinates on the screen of the electronic device. The target coordinates may be at least one of the following: coordinates of a center point on the screen of the electronic device, coordinates of a center point of a specific boundary on the screen of the electronic device, and coordinates of a boundary point on the screen of the electronic device. Specifically, this may be determined according to an actual use requirement, and is not specifically limited in this embodiment of this application.

Optionally, in this embodiment of this application, a correspondence between the positioning coordinates and the target coordinates may be at least one of the following: the positioning coordinates are coordinates directly opposite the target coordinates on the screen of the electronic device, the positioning coordinates are coordinates at a specified distance from the target coordinates along a preset direction, the positioning coordinates and the target coordinates meet a preset function relationship, and the positioning coordinates are coordinates in a region with the target coordinates as a center and a preset length as a radius. Specifically, this may be determined based on an actual use requirement, and is not specifically limited in this embodiment of this application.

For example, at a moment, in a case that a coordinate point of a corresponding XOY coordinate system of a target page corresponding to a center point (0, 0) on the screen of the electronic device is (1, 1) (that is, in this case, the center point (0, 0) on the screen of the electronic device is directly opposite to the point (1, 1) in the target page), a region of the target page displayed on the screen of the electronic device may be represented by coordinates (1, 1), that is, at this moment, the region parameter of the electronic device may be a parameter corresponding to the coordinates (1, 1).

Optionally, in this embodiment of this application, before the first input is received, the target page is displayed on the screen of the electronic device by using the first display parameter, where the first display parameter includes a first display proportion and first coordinates (that is, the first region parameter). After receiving the first input, the electronic device may determine a second display proportion according to the first display proportion and the first input, and determine second coordinates according to the first coordinates, a target display proportion, and the first input, that is, determine a second display parameter by determining the second display proportion and the second coordinates. The target display proportion is the first display proportion or the second display proportion. It should be noted that the first display parameter is different from the second display parameter.

It should be noted that in this embodiment of this application, a method for representing a region parameter by the electronic device by using coordinates may be specifically as follows: The electronic device establishes a coordinate system on the target page, where each coordinate position may be used to indicate one region in the target page. Then, the electronic device determines the first coordinates or the second coordinates according to the target page and coordinates of a point corresponding to a target point on the screen of the electronic device. The target point on the screen of the electronic device may be a center point on the screen of the electronic device, a boundary point on the screen of the electronic device, or the like.

Specifically, that the electronic device determines the second display proportion according to the first display proportion and the first input may be specifically as follows: The electronic device first obtains the first display proportion, and then the electronic device determines whether the first input changes a display proportion of the target page. If the first input changes the display proportion of the target page, the electronic device uses the changed display proportion as the second display proportion. If the first input does not change the display proportion of the target page, the first display proportion is used as the second display proportion.

Specifically, the electronic device may specifically determine the second coordinates according to the display size of the screen of the electronic device, the first coordinates, the target display proportion, and the first input in two manners: Manner 1: In a case that the target display proportion is the first display proportion, that is, display proportions of the target page before and after the electronic device receives the first input do not change, and are the first display proportion. Before receiving the first input, the electronic device may obtain the first coordinates and the first display proportion. Then, after the electronic device receives the first input (in this case, the first input changes only a region in which the target page is displayed on the screen of the electronic device, and the display proportion of the target page is not changed), in a case that the first display proportion is not changed, the electronic device determines a position of the changed second coordinates according to the first input, the display size of the screen, and the first coordinates. For example, if the first input is a tap and drag operation, the electronic device obtains the second coordinates through calculation according to a drag distance and the first coordinates in a case that the first display proportion is not changed. Manner 2: In a case that the target display proportion is the second display proportion, after the electronic device receives the first input, both the display proportion and the coordinates of the target page change. Before receiving the first input, the electronic device may obtain the first coordinates and the first display proportion. Then, the electronic device obtains the second display proportion after receiving the first input. Then, the electronic device converts the first coordinates into a corresponding position of the target page displayed in the second display proportion, and then determines the second coordinates according to the display size of the screen and the first input. For example, if the first input is a slide input in which two fingers slide toward each other, after the electronic device determines the first coordinates in the target page according to the second display proportion, the electronic device may determine a displacement vector according to the slide distance in the second display proportion, and further determine the second coordinates according to the displacement vector and the first coordinates.

It should be noted that in this embodiment of this application, an application icon in a region displayed on the screen of the electronic device in the target page is an application icon visible to the user, and an application icon in a region not displayed on the screen of the electronic device is an application icon invisible to the user.

Optionally, in this embodiment of this application, the first input may include at least one of a first sub-input and a second sub-input.

The first sub-input may be used to trigger adjustment of the proportion parameter of the target page, and the second sub-input may be used to trigger adjustment of the region parameter of the target page.

Optionally, in this embodiment of this application, the first sub-input is an input for changing the display proportion of the target page, and the first sub-input may adjust the region parameter of the target page, or may only zoom in or zoom out display of the region without changing the region parameter of the target page. For example, the first sub-input may be an input in which the user controls two fingers to slide toward or against each other in a case that the user presses the screen by using the two fingers. The second sub-input may be an input of changing the display position and the display proportion of the target page, or an input of changing only the display position of the target page without changing the display proportion of the target page. For example, in the first input, the user moves the target page in any direction through a drag input.

It should be noted that, in this embodiment of this application, the first sub-input and the second sub-input may separately control adjustment of one of the proportion parameters and the region parameter. In actual use, the user may perform adjustment according to an actual use requirement, and flexibly adjust the proportion parameter and/or the region parameter through the first sub-input and the second sub-input. That is, the first input may include three input forms: a first sub-input, a second sub-input, and an input that has functions of the first sub-input and the second sub-input.

It can be understood that, in this embodiment of this application, the first sub-input and the second sub-input may be separately used to control the proportion parameter of the target page and adjust the region parameter of the target page. In this way, the user can implement independent control on the proportion parameter and the region parameter of the target page according to an actual use requirement, so that the user can flexibly control the proportion parameter and the region parameter, thereby improving human-computer interaction performance.

For example, FIG. 2 is a schematic diagram of an operation of updating and displaying a target page by an electronic device. An example in which the proportion parameter for displaying the target page is not changed and the region parameter changes in display parameters of the electronic device is used for description. As shown in (a) in FIG. 2, a partial region 002 in a target page is displayed on a screen of an electronic device 001 according to a first display parameter, where the region 002 includes 20 application icons: an "application 1" to an "application 20". In this case, the user may drag the target page in the region 002 of the target page in a direction F 1, and the electronic device 001 responds to an input (that is, the first input) of dragging the target page. As shown in (b) in FIG. 2, the electronic device 001 updates the target page on the screen of the electronic device 001 according to a second display parameter. In this case, another partial region 003 of the target page is displayed on the screen of the electronic device 001, where four application icons are displayed in the region 003: an "application A", an "application B", an "application C", and an "application D".

This application provides an application icon display method. In a case that an application icon in a target page is displayed on a screen by using a first display parameter, an electronic device may be triggered, through a first input, to display the application icon in the target page on the screen by using a second display parameter. The target page includes all application icons in the electronic device, and a display parameter of the target page includes at least one of the following: a proportion parameter and a region parameter, where the region parameter is used to indicate a region in which an application icon in the target page that is displayed in a current display region of the screen is located. That is, through the first input on the target page, the user may trigger the electronic device to update the application icon displayed on the screen and/or update a display size of the application icon displayed on the screen. In this way, interest of human-computer interaction in an application icon update process is improved, and coherence of updating display of an application icon on the screen can be improved while avoiding switching between different desktop pages of the electronic device. In addition, the electronic device displays the target page, some or all application icons in the electronic device can be displayed to a user at a same moment by using one desktop page. For example, when the second display parameter corresponds to all icons in the target page, the electronic device displays the target page by using the second display parameter, so that all icons in the electronic device can be displayed to the user at a same moment. Therefore, even if there are many application icons in the electronic device, the user can intuitively and quickly search for a required application icon in the target page displayed in the electronic device, without browsing a plurality of desktop pages of the electronic device. In this way, steps of searching for an application icon by the user from many application icons are simplified, and time consumption is reduced.

Optionally, in this embodiment of this application, at least one parameter control is further displayed on the screen of the electronic device. The "receiving a first input by a user" in step 101 may be specifically implemented by the following step 101a.

Step 101a: The electronic device receives the first input by the user on a target parameter control in the at least one parameter control.

Each of the at least one parameter control corresponds to one group of display parameters of the target page, and the second display parameter is one group of display parameters corresponding to the target parameter control.

It should be noted that, in this embodiment of this application, each control in the at least one parameter control corresponds to one group of display parameters of the target page, and the display parameters may specifically include a proportion parameter and a region parameter. The second display parameters may be one group of display parameters of the target page that are corresponding to one control in the at least one parameter control.

Optionally, in this embodiment of this application, the at least one parameter control may be displayed on the screen of the electronic device in at least one of the following manners: Manner 1: A plurality of parameter controls are displayed on an edge of the screen of the electronic device, where each parameter is only one group of display parameters of the target page. Manner 2: A first target control is displayed on the screen of the electronic device, where at least one sub-control is displayed in the first target control, and each sub-control is one parameter control. Manner 3: A first target window is displayed on the screen of the electronic device, where the target window includes at least one menu, and a menu item in each menu may be used to indicate one parameter control. Specifically, this may be determined according to an actual use requirement, and is not specifically limited in this embodiment of this application.

Optionally, in this embodiment of this application, the first input may be specifically a touch input by the user on the target parameter control in the at least one parameter control. The touch input may be at least one of the following: a single-tap input, a double-tap input, a long-press input, a drag input along a preset track, and the like. For details, refer to the specific descriptions of the first input in step 101. Details are not described herein again.

It can be understood that, in this embodiment of this application, the electronic device may receive the first input by the user on the target parameter control in the at least one parameter control. In this way, the electronic device may display the target page on the screen of the electronic device according to the display parameters corresponding to the target parameter control selected by the user. That is, the user may flexibly select the target parameter control according to an actual use requirement, so that a display manner of the target page on the screen of the electronic device can be controlled.

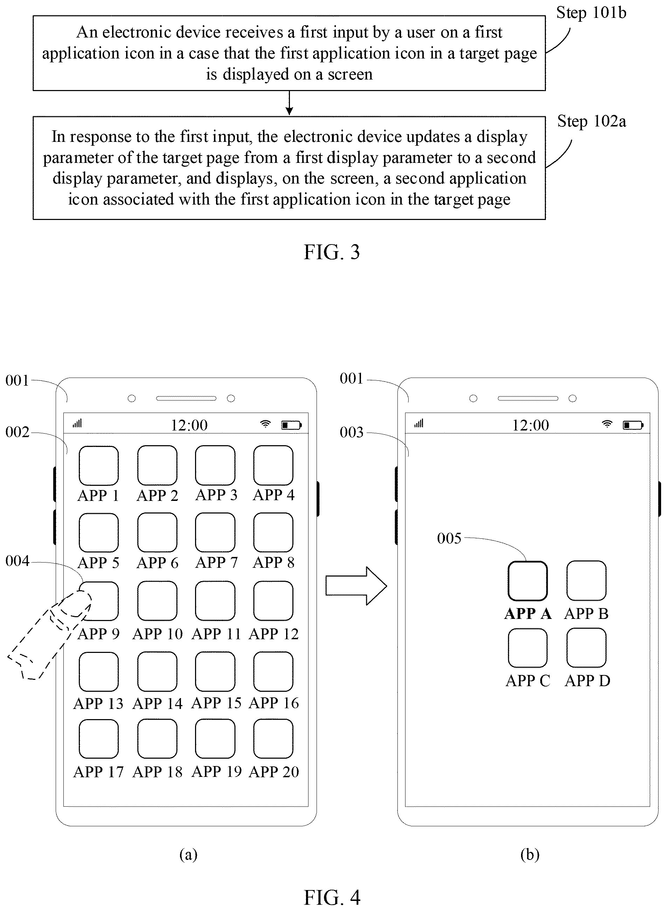

Optionally, with reference to FIG. 1, as shown in FIG. 3, step 101 may be specifically implemented by the following step 101b. Correspondingly, step 102 may also be implemented by the following step 102a.

Step 101b: The electronic device receives the first input by the user on a first application icon in a case that the first application icon in the target page is displayed on the screen.

It should be noted that, in this embodiment of this application, the first input may be used to trigger update of a region in which the target page is displayed on the screen of the electronic device, that is, the region in which the target page is displayed on the screen of the electronic device is updated and displayed as another region of the target page. Specifically, the first input may be an input that triggers a window of the electronic device to display a region in which an application icon associated with the first application icon is located.

Step 102a: In response to the first input, the electronic device updates the display parameter of the target page from the first display parameter to the second display parameter, and displays, on the screen, a second application icon associated with the first application icon in the target page.

A region indicated by a region parameter in the first display parameter is a region in which the first application icon in the target page is located, and a region indicated by a region parameter in the second display parameter is a region in which the second application icon in the target page is located.

It should be noted that in this embodiment of this application, that the first application icon is associated with the second application icon means that a first application indicated by the first application icon is associated with a second application indicated by the second application icon, or that a region in which the first application icon is located in the target page is associated with a region in which the second application icon is located in the target page.

Optionally, in this embodiment of this application, before the electronic device receives the first input by the user, the application icon display method provided in this embodiment of this application may further include setting an association relationship. The association relationship may be specifically set in any one of the following manners: Manner A: The user may select at least two application icons in the target page, and trigger, through an input by the user, a setting interface for displaying the association relationship, and the user may set, on the interface, applications corresponding to the selected application icon to be associated with each other. When the association relationship is set for applications indicated by these application icons, a priority may be further set. The electronic device may receive an input by the user, and trigger the electronic device to sequentially update the application icons on the display screen according to the preset priority. Manner B: The user may select an input on two regions in the target page, and trigger a setting interface for displaying the association relationship, and the user may set the selected two regions to be associated with each other on the interface. That is, in a case that one region of the target page is displayed on the screen of the electronic device, the user may trigger, through an input (for example, the first input), the electronic device to update and display a region of another target page associated with the region. Specifically, this may be determined according to an actual use requirement, and is not specifically limited in this embodiment of this application.

It should be noted that in this embodiment of this application, the updating the first display parameter to the second display parameter may be specifically updating a region indicated by the first display parameter (that is, the region in which the first application icon is located in the target page) to a region indicated by the second display parameter (that is, the region in which the second application icon is located in the target page).

Optionally, in this embodiment of this application, in a case that the electronic device updates and displays the second application associated with the first application, the second application icon may be highlighted and displayed. Specifically, the highlighted display manner may be at least one of the following: displaying the second application icon in the middle of the screen, displaying a name of the second application icon in bold, displaying the second application icon in a preset color, displaying the second application icon in a preset size, displaying the second application icon in a preset special effect, and the like. The preset special effect may be a light emitting special effect, a color gradient special effect, a flicker special effect, or the like. Specifically, this may be determined according to an actual use requirement, and is not specifically limited in this embodiment of this application.

For example, FIG. 4 is a schematic diagram of an operation of updating an associated application icon by an electronic device. As shown in (a) in FIG. 4, a partial region 002 of a target page is displayed on a screen of an electronic device 001 according to a first display parameter, where the region 002 includes 20 application icons: an "application 1" to an "application 20". In this case, the user may press an application icon 004 of an "application 9" for a long time, and the electronic device 001 responds to the long-press input (that is, the first input). As shown in (b) in FIG. 4, the electronic device 001 updates the target page on the screen of the electronic device 001 according to a second display parameter. In this case, another partial region 003 of the target page is displayed on the screen of the electronic device 001, and an application icon 005 of an "application A" associated with the application icon 004 of the "application 9" is centered and displayed in the region 003 in bold.

It can be understood that in this embodiment of this application, the electronic device may update, in response to the first input, the region in which the first application icon in the target page is located to the region in which the second application icon associated with the first application icon is located. Therefore, the user may trigger, by using an association relationship between application icons, the electronic device to quickly jump to a region in which another application icon associated with one application icon is located, so as to quickly search for the application icon, thereby facilitating the user to perform an operation on an application icon that needs to be found.

Optionally, in this embodiment of this application, the "displaying the application icon in the target page on the screen by using the second display parameter" in step 102 may be specifically implemented by the following step 102b.

Step 102b: The electronic device displays the application icon in the target page on the screen by using the second display parameter, and displays a target control in the target page in an overlaying display manner or a floating display manner.

The target control includes at least one of the following: a control used to display at least one first preset application icon in all the application icons, a control used to display a notification message in the electronic device, and a control used to display a shortcut interface of a target application in the electronic device.

Optionally, in this embodiment of this application, the target control may include at least one of a first control, a second control, and a third control. The first control is a control used to display the at least one first preset application icon in all the application icons. The second control is a control used to display the notification message in the electronic device. The third control is a control used to display the shortcut interface of the target application in the electronic device.

Optionally, the at least one first preset application icon displayed by the first control is an application icon determined according to a preset rule. The preset rule may include at least one of the following: determining the first preset application icon according to a frequency and duration of using an application by the user, determining the first preset application icon according to whether the user adds a label to an application, and determining the first preset application icon according to a use habit and a use time of the user. A manner of determining the first preset application icon may be specifically determined according to an actual requirement, and is not specifically limited in this embodiment of this application.

Optionally, in this embodiment of this application, in a case that the first control including at least one first preset application icon is displayed on the screen of the electronic device, the user may perform an input on the first control, and the electronic device may update display of a preset application in the first control in response to the first input. Specifically, the first control displayed on the screen of the electronic device includes A first preset application icons. The electronic device may receive a first target input by the user on the first control, and the electronic device updates and displays, in response to the first target input, the A first preset application icons in the first control displayed on the screen of the electronic device as B first preset application icons. The first target input may be used to trigger the electronic device to update and display the first preset application icon in the first control, and A and B are same or different positive integers.

Optionally, in this embodiment of this application, the notification message displayed on the second control may be any one of the following: a notification message of an application indicated by any application icon in the target page of the electronic device, a notification message of a system of the electronic device, prompt information received by the electronic device, a message recommended by a server or the electronic device according to an application installed in the electronic device, and the like. Specifically, this may be determined according to an actual use requirement, and is not specifically limited in this embodiment of this application.

Optionally, in this embodiment of this application, the shortcut interface of the target application displayed on the third control is an interface that can perform a quick and simple operation on the target application, and a display size of the interface may be appropriately reduced relative to the screen of the electronic device. Specifically, the shortcut interface may be presented on the third control in a form of a small window or a small plug-in. The target application may be a default application of the system of the electronic device, for example, a weather application. The target application may also be an application that is manually set by the user according to an actual use requirement, for example, a notebook application. Specifically, this may be determined according to an actual use requirement, and is not specifically limited in this embodiment of this application.

It should be noted that, in this embodiment of this application, the foregoing three controls may be used separately in an actual use process, or may be used in combination, and a control set used in combination is presented as a general control. For example, in a case that the second control and the third control are used together, a general control may be displayed on the screen of the electronic device, and the second control and the third control may exist as a sub-control of the general control or a function module of the general control. That is, the general control includes a sub-control for displaying the notification message and a sub-control for displaying the shortcut interface of the target application, or the general control may include a function module for displaying the notification message and a function module for displaying the shortcut interface of the target application. In an actual use process, the controls may be specifically combined and used according to an actual use requirement. This is not specifically limited in this embodiment of this application.

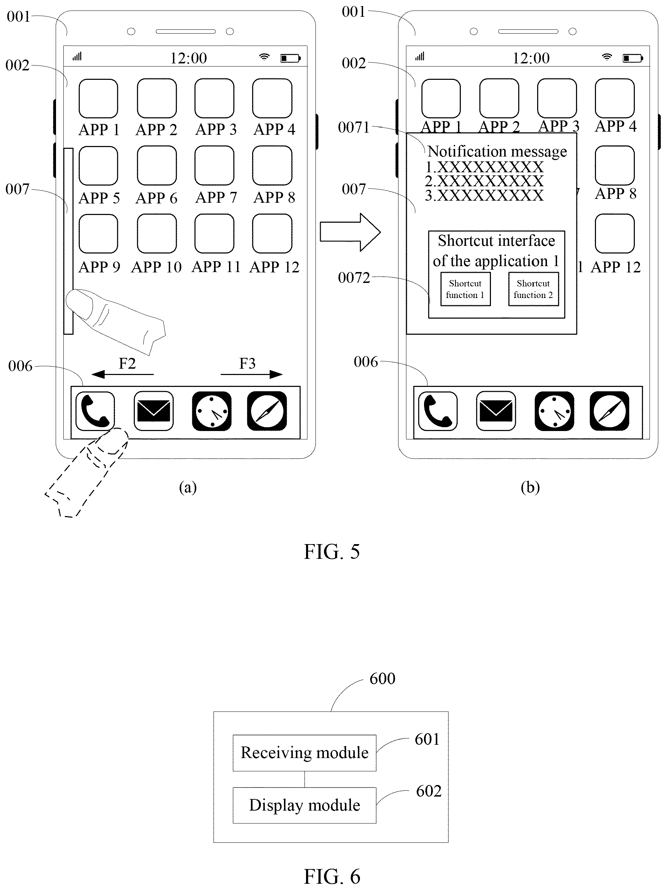

For example, FIG. 5 is a schematic diagram of an operation of displaying a target control on a screen of an electronic device. As shown in (a) in FIG. 5, an electronic device 001 displays a region 002 of a target page, where 12 application icons are displayed in the region 002: an "application 1" to an "application 12". A control 006 is displayed on a lower part of the screen of the electronic device 001, and four application icons with a higher use frequency of the user are displayed in the control 006. The user may trigger the electronic device 001 to update an icon displayed in the display control 006 through a slide input in a direction F2 or F3. The electronic device 001 may further display a control 007 on one side of the screen. The user may tap the control 007 twice. The electronic device 001 may respond to the double-tap input. As shown in (b) in FIG. 5, an expanded control 007 is displayed on the screen of the electronic device 001 in a hover manner. The control 007 includes a message notification 0071 and a shortcut interface 0072 of an application 1. In this way, the user may read the notification message 0071 in the control 007, or may perform a shortcut operation on the shortcut interface 0072 of the application 1, for example, an operation shortcut function 1 or a shortcut function 2.

It can be understood that, in this embodiment of this application, the control of the first preset application icon, the control of the notification message, and the control of the shortcut interface of the target application may be further displayed on the screen of the electronic device. Therefore, the user can quickly search for an application icon required by the user through display of the control of the first preset application icon, the user can conveniently read the notification message through the control of the notification message, and the user can conveniently and quickly operate the target application through the control of the shortcut interface. In view of the above, controls of various functions are displayed on the screen of the electronic device, so that the user can easily operate the electronic device, thereby improving human-computer interaction performance and user experience.

It should be noted that, the application icon display method provided in the embodiments of this application may be performed by an application icon display apparatus, or a control module, in the application icon display apparatus, configured to perform and load the application icon display method. In the embodiments of this application, an example in which the application icon display apparatus performs and loads the application icon display method is used to describe the application icon display method provided in the embodiments of this application.

As shown in FIG. 6, an embodiment of this application provides an application icon display apparatus 600. The application icon display apparatus 600 may include a receiving module 601 and a display module 602. The receiving module 601 may be configured to receive a first input by a user in a case that an application icon in a target page is displayed on a screen by using a first display parameter. The display module 602 may be configured to: in response to the first input received by the receiving module 601, update a display parameter of the target page from the first display parameter to a second display parameter, and display the application icon in the target page on the screen by using the second display parameter. The target page includes all application icons in the electronic device, and a display parameter of the target page includes at least one of the following: a proportion parameter and a region parameter, where the region parameter may be used to indicate a region in which an application icon in the target page that is displayed in a current display region of the screen is located.

Optionally, in this embodiment of this application, the region parameter is determined according to a display size of the screen of the electronic device, positioning coordinates, and the proportion parameter. The positioning coordinates are coordinates in the target page that are corresponding to target coordinates on the screen.

Optionally, in this embodiment of this application, at least one parameter control is further displayed on the screen. The receiving module 601 may be specifically configured to receive the first input by the user on a target parameter control in the at least one parameter control. Each of the at least one parameter control corresponds to one group of display parameters of the target page, and the second display parameter is one group of display parameters corresponding to the target parameter control.

Optionally, in this embodiment of this application, the receiving module 601 may be specifically configured to receive the first input by the user on a first application icon in a case that the first application icon in the target page is displayed on the screen. The display module 602 may be specifically configured to: update the display parameter of the target page from the first display parameter to the second display parameter, and display, on the screen, a second application icon associated with the first application icon in the target page. A region indicated by a region parameter in the first display parameter is a region in which the first application icon in the target page is located, and a region indicated by a region parameter in the second display parameter is a region in which the second application icon in the target page is located.

Optionally, in this embodiment of this application, the first input includes at least one of a first sub-input and a second sub-input. The first sub-input may be used to trigger adjustment of the proportion parameter of the target page, and the second sub-input may be used to trigger adjustment of the region parameter of the target page.

Optionally, in this embodiment of this application, the display module 602 may be specifically configured to: display the application icon in the target page on the screen by using the second display parameter, and display a target control in the target page in an overlaying display manner or a floating display manner. The target control includes at least one of the following: a control that may be used to display at least one first preset application icon in all the application icons, a control that may be used to display a notification message in the electronic device, and a control that may be used to display a shortcut interface of a target application in the electronic device.

The application icon display apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic terminal, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in this embodiment of this application.

The application icon display apparatus in this embodiment of this application may be an apparatus with an operating system. The operating system may be an Android (Android) operating system, an iOS operating system, or another possible operating system. This is not specifically limited in the embodiments of this application.

The application icon display apparatus provided in this embodiment of this application can implement the processes implemented by the application icon display apparatus in the method embodiments in FIG. 1 to FIG. 5. To avoid repetition, details are not described herein again.

This application provides an application icon display apparatus. In a case that an application icon in a target page is displayed on a screen by using a first display parameter, an electronic device may be triggered, through a first input, to display the application icon in the target page on the screen by using a second display parameter. The target page includes all application icons in the electronic device, and a display parameter of the target page includes at least one of the following: a proportion parameter and a region parameter, where the region parameter is used to indicate a region in which an application icon in the target page that is displayed in a current display region of the screen is located. That is, through the first input on the target page, the user may trigger the electronic device to update the application icon displayed on the screen and/or update a display size of the application icon displayed on the screen. In this way, interest of human-computer interaction in an application icon update process is improved, and coherence of updating display of an application icon on the screen can be improved while avoiding switching between different desktop pages of the electronic device. In addition, the electronic device displays the target page, some or all application icons in the electronic device can be displayed to a user at a same moment by using one desktop page. For example, when the second display parameter corresponds to all icons in the target page, the electronic device displays the target page by using the second display parameter, so that all icons in the electronic device can be displayed to the user at a same moment. Therefore, even if there are many application icons in the electronic device, the user can intuitively and quickly search for a required application icon in the target page displayed in the electronic device, without browsing a plurality of desktop pages of the electronic device. In this way, steps of searching for an application icon by the user from many application icons are simplified, and time consumption is reduced.

Optionally, an embodiment of this application further provides an electronic device 1000, including a processor 1010, a memory 1009, and a program or an instruction that is stored in the memory 1009 and executable on the processor 1010. When the program or the instruction is executed by the processor 1010, the processes of the foregoing application icon display method embodiment are implemented and a same technical effect can be achieved. To avoid repetition, details are not described herein again.

It should be noted that the electronic device in this embodiment of this application includes the foregoing mobile electronic device and the foregoing non-mobile electronic device.

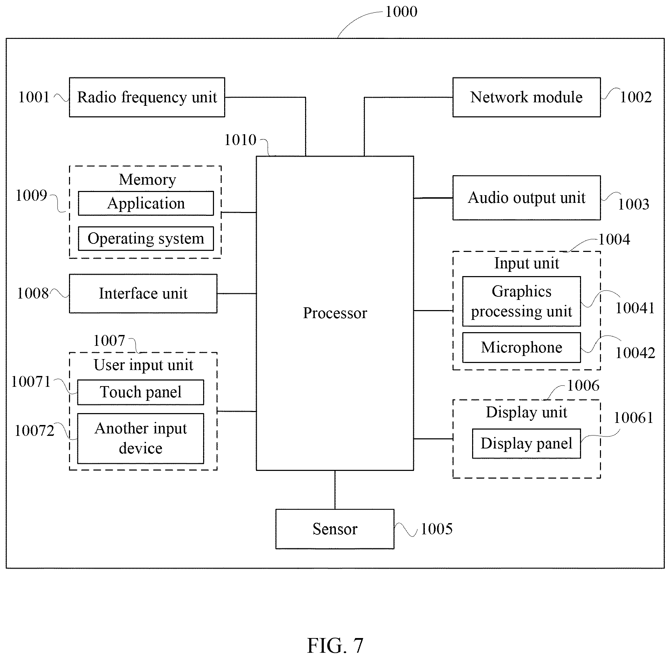

FIG. 7 is a schematic structural diagram of hardware of an electronic device according to an embodiment of this application.

An electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 7 does not constitute a limitation on the electronic device. The electronic device may include components more or fewer than those shown in the diagram, a combination of some components, or different component arrangements. Details are not described herein.

The user input unit 1007 may be configured to receive a first input by a user in a case that an application icon in a target page is displayed on a screen by using a first display parameter. The display unit 1006 may be configured to: in response to the first input received by the user input unit 1007, update a display parameter of the target page from the first display parameter to a second display parameter, and display the application icon in the target page on the screen by using the second display parameter. The target page includes all application icons in the electronic device, and a display parameter of the target page includes at least one of the following: a proportion parameter and a region parameter, where the region parameter may be used to indicate a region in which an application icon in the target page that is displayed in a current display region of the screen is located.

This application provides an electronic device. In a case that an application icon in a target page is displayed on a screen by using a first display parameter, an electronic device may be triggered, through a first input, to display the application icon in the target page on the screen by using a second display parameter. The target page includes all application icons in the electronic device, and a display parameter of the target page includes at least one of the following: a proportion parameter and a region parameter, where the region parameter is used to indicate a region in which an application icon in the target page that is displayed in a current display region of the screen is located. That is, through the first input on the target page, the user may trigger the electronic device to update the application icon displayed on the screen and/or update a display size of the application icon displayed on the screen. In this way, interest of human-computer interaction in an application icon update process is improved, and coherence of updating display of an application icon on the screen can be improved while avoiding switching between different desktop pages of the electronic device. In addition, the electronic device displays the target page, some or all application icons in the electronic device can be displayed to a user at a same moment by using one desktop page. For example, when the second display parameter corresponds to all icons in the target page, the electronic device displays the target page by using the second display parameter, so that all icons in the electronic device can be displayed to the user at a same moment. Therefore, even if there are many application icons in the electronic device, the user can intuitively and quickly search for a required application icon in the target page displayed in the electronic device, without browsing a plurality of desktop pages of the electronic device. In this way, steps of searching for an application icon by the user from many application icons are simplified, and time consumption is reduced.

Optionally, in this embodiment of this application, the region parameter is determined according to a display size of the screen of the electronic device, positioning coordinates, and the proportion parameter. The positioning coordinates are coordinates in the target page that are corresponding to target coordinates on the screen.

Optionally, in this embodiment of this application, at least one parameter control is further displayed on the screen. The user input unit 1007 may be specifically configured to receive the first input by the user on a target parameter control in the at least one parameter control. Each of the at least one parameter control corresponds to one group of display parameters of the target page, and the second display parameter is one group of display parameters corresponding to the target parameter control.

It can be understood that, in this embodiment of this application, the electronic device may receive the first input by the user on the target parameter control in the at least one parameter control. In this way, the electronic device may display the target page on the screen of the electronic device according to the display parameters corresponding to the target parameter control selected by the user. That is, the user may flexibly select the target parameter control according to an actual use requirement, so that a display manner of the target page on the screen of the electronic device can be controlled.

Optionally, in this embodiment of this application, the user input unit 1007 may be specifically configured to receive the first input by the user on a first application icon in a case that the first application icon in the target page is displayed on the screen. The display unit 1006 may be specifically configured to: update the display parameter of the target page from the first display parameter to the second display parameter, and display, on the screen, a second application icon associated with the first application icon in the target page. A region indicated by a region parameter in the first display parameter is a region in which the first application icon in the target page is located, and a region indicated by a region parameter in the second display parameter is a region in which the second application icon in the target page is located.

It can be understood that in this embodiment of this application, the electronic device may update, in response to the first input, the region in which the first application icon in the target page is located to the region in which the second application icon associated with the first application icon is located. Therefore, the user may trigger, by using an association relationship between application icons, the electronic device to quickly jump to a region in which another application icon associated with one application icon is located, so as to quickly search for the application icon, thereby facilitating the user to perform an operation on an application icon that needs to be found.

Optionally, in this embodiment of this application, the first input includes at least one of a first sub-input and a second sub-input. The first sub-input may be used to trigger adjustment of the proportion parameter of the target page, and the second sub-input may be used to trigger adjustment of the region parameter of the target page.

It can be understood that, in this embodiment of this application, the first sub-input and the second sub-input may be separately used to control the proportion parameter of the target page and adjust the region parameter of the target page. In this way, the user can implement independent control on the proportion parameter and the region parameter of the target page according to an actual use requirement, so that the user can flexibly control the proportion parameter and the region parameter, thereby improving human-computer interaction performance.

Optionally, in this embodiment of this application, the display unit 1006 may be specifically configured to: display the application icon in the target page on the screen by using the second display parameter, and display a target control in the target page in an overlaying display manner or a floating display manner. The target control includes at least one of the following: a control that may be used to display at least one first preset application icon in all the application icons, a control that may be used to display a notification message in the electronic device, and a control that may be used to display a shortcut interface of a target application in the electronic device.

It can be understood that, in this embodiment of this application, the control of the first preset application icon, the control of the notification message, and the control of the shortcut interface of the target application may be further displayed on the screen of the electronic device. Therefore, the user can quickly search for an application icon required by the user through display of the control of the first preset application icon, the user can conveniently read the notification message through the control of the notification message, and the user can conveniently and quickly operate the target application through the control of the shortcut interface. In view of the above, controls of various functions are displayed on the screen of the electronic device, so that the user can easily operate the electronic device, thereby improving human-computer interaction performance and user experience.

An embodiment of this application further provides a readable storage medium. The readable storage medium stores a program or an instruction, and when the program or the instruction is executed by a processor, the processes of the foregoing application icon display method embodiment are implemented and a same technical effect can be achieved. To avoid repetition, details are not described herein again.

The processor is the processor in the electronic device in the foregoing embodiment. The readable storage medium includes a computer-readable storage medium, such as a computer read-only memory (read-only memory, ROM), a random access memory (random access memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing application icon display method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An application icon display method, wherein the method comprises:
receiving a first input by a user in a case that an application icon in a target page is displayed on a screen by using a first display parameter; and
in response to the first input, updating a display parameter of the target page from the first display parameter to a second display parameter, and displaying the application icon in the target page on the screen by using the second display parameter, wherein
the target page comprises all application icons in an electronic device, and the display parameter of the target page comprises at least one of following: a proportion parameter and a region parameter, wherein the region parameter is used to indicate a region in which an application icon in the target page that is displayed in a current display region of the screen is located.

2. The method according to claim 1, wherein the region parameter is determined according to a display size of the screen, positioning coordinates, and the proportion parameter; and
the positioning coordinates are coordinates in the target page that are corresponding to target coordinates on the screen.

3. The method according to claim 1, wherein at least one parameter control is further displayed on the screen; and
the receiving a first input by a user comprises:
receiving the first input by the user on a target parameter control in the at least one parameter control, wherein
each of the at least one parameter control corresponds to one group of display parameters of the target page, and the second display parameter is one group of display parameters corresponding to the target parameter control.

4. The method according to claim 1, wherein the receiving a first input by a user in a case that an application icon in a target page is displayed on a screen by using a first display parameter comprises:
receiving the first input by the user on a first application icon in a case that the first application icon in the target page is displayed on the screen; and
the updating a display parameter of the target page from the first display parameter to a second display parameter, and displaying the application icon in the target page on the screen by using the second display parameter comprises:
updating the display parameter of the target page from the first display parameter to the second display parameter, and displaying, on the screen, a second application icon that is in the target page and associated with the first application icon, wherein
a region indicated by a region parameter in the first display parameter is a region in which the first application icon in the target page is located, and a region indicated by a region parameter in the second display parameter is a region in which the second application icon in the target page is located.

5. The method according to any one of claims 1 to 4, wherein
the displaying the application icon in the target page on the screen by using the second display parameter comprises:
displaying the application icon in the target page on the screen by using the second display parameter, and displaying a target control in the target page in an overlaying display manner or a floating display manner, wherein
the target control comprises at least one of following: a control used to display at least one first preset application icon in all the application icons, a control used to display a notification message of the electronic device, and a control used to display a shortcut interface of a target application in the electronic device.

6. An application icon display apparatus, wherein the apparatus comprises a receiving module and a display module, wherein
the receiving module is configured to receive a first input by a user in a case that an application icon in a target page is displayed on a screen by using a first display parameter; and
the display module is configured to: in response to the first input received by the receiving module, update a display parameter of the target page from the first display parameter to a second display parameter, and display the application icon in the target page on the screen by using the second display parameter, wherein
the target page comprises all application icons in an electronic device, and the display parameter of the target page comprises at least one of following: a proportion parameter and a region parameter, wherein the region parameter is used to indicate a region in which an application icon in the target page that is displayed in a current display region of the screen is located.

7. The apparatus according to claim 6, wherein the region parameter is determined according to a display size of the screen, positioning coordinates, and the proportion parameter; and
the positioning coordinates are coordinates in the target page that are corresponding to target coordinates on the screen.

8. The apparatus according to claim 6, wherein at least one parameter control is further displayed on the screen; and
the receiving module is specifically configured to receive the first input by the user on a target parameter control in the at least one parameter control, wherein
each of the at least one parameter control corresponds to one group of display parameters of the target page, and the second display parameter is one group of display parameters corresponding to the target parameter control.

9. The apparatus according to claim 6, wherein the receiving module is specifically configured to receive the first input by the user on a first application icon in a case that the first application icon in the target page is displayed on the screen; and
the display module is specifically configured to: update the display parameter of the target page from the first display parameter to the second display parameter, and display, on the screen, a second application icon associated with the first application icon in the target page, wherein
a region indicated by a region parameter in the first display parameter is a region in which the first application icon in the target page is located, and a region indicated by a region parameter in the second display parameter is a region in which the second application icon in the target page is located.

10. The apparatus according to any one of claims 6 to 9, wherein the display module is specifically configured to: display the application icon in the target page on the screen by using the second display parameter, and display a target control in the target page in an overlaying display manner or a floating display manner, wherein
the target control comprises at least one of following: a control used to display at least one first preset application icon in all the application icons, a control used to display a notification message in the electronic device, and a control used to display a shortcut interface of a target application in the electronic device.

11. An electronic device, comprising a processor, a memory, and a program or an instruction that is stored in the memory and executable on the processor, wherein when the program or the instruction is executed by the processor, the steps of the application icon display method according to any one of claims 1 to 5 are implemented.

12. A readable storage medium, wherein the readable storage medium stores a program or instruction, and when the program or the instruction is executed by a processor, the steps of the application icon display method according to any one of claims 1 to 5 are implemented.

13. A computer program product, wherein the computer program product is executed by at least one processor to implement the steps of the application icon display method according to any one of claims 1 to 5.

14. An electronic device, wherein the electronic device is configured to perform the application icon display method according to any one of claims 1 to 5.
